# EUROPÄISCHE PATENTANMELDUNG

(11) **EP 4 342 272 A1**
(43) Veröffentlichungstag der Anmeldung: **27.03.2024**
(21) Anmeldenummer: 23193088.4
(22) Anmeldetag: 24.08.2023
(51) Int. Cl.: A01B 59/042, B60D 1/155

(54) **DEICHSEL UND ARBEITSGERÄT**

(30) Priorität: 23.09.2022 DE 102022124468
(71) Anmelder: Deere & Company, Moline, IL 61265 (US)
(72) Erfinder: Guiet, Lionel, Mannheim (DE)
(74) Vertreter: Stein, Stefan

(57) **Zusammenfassung**

Es wird eine Deichsel (16) für ein landwirtschaftliches Arbeitsgerät (14), insbesondere für eine landwirtschaftliche Ballenpresse, mit einem Deichselträger (50, 50') und einem Koppelmittel (70) vorgeschlagen, wobei das Koppelmittel (70) mit dem Deichselträger (50, 50') verbunden ist. Der Deichselträger (50, 50') ist dabei derart ausgebildet ist, dass das Koppelmittel (70) mit dem Deichselträger (50, 50') in zwei unterschiedliche Positionen zum Deichselträger (50, 50') bringbar ist. Es wird darüber hinaus ein Arbeitsgerät (14), insbesondere eine landwirtschaftliche Rundballenpresse, mit einer Deichsel (16) vorgeschlagen.

## Beschreibung

Die Erfindung betrifft eine Deichsel für ein landwirtschaftliches Arbeitsgerät gemäss dem Oberbegriff der Anspruchs 1 und ein landwirtschaftliches Arbeitsgerät gemäss dem Oberbegriff des Anspruchs 10.

Landwirtschaftliche Arbeitsgeräte mit einer Deichsel zum Ziehen des Arbeitsgeräts mit einem Zugfahrzeug sind bekannt. Soll das gezogene landwirtschaftliche Arbeitsgerät beispielsweise in einer Arbeitsstellung seitlich der Spur und in der Straßentransportfahrt mittig hinter dem Zugfahrzeug laufen, so kann vorgesehen sein, dass die Deichsel gegenüber dem nachlaufenden Arbeitsgerät abknicken kann. Eine derartige Deichsel kann an einem Ende, beispielsweise mittels eines Schwenklagers, am nachlaufenden Arbeitsgeräteteil, also dem nachlaufenden Teil des landwirtschaftlichen Arbeitsgeräts, um eine Hochachse schwenkbar gelagert sein und beispielsweise mittels eines als ein Hydraulikzylinder ausgebildeten Verstellmittels bewegt werden.

Solche Arbeitsgeräte können an unterschiedlich ausgebildete Zugfahrzeuge angehängt werden. Insbesondere kann die Höhe einer Zugvorrichtung, an die das Arbeitsgerät mittels seiner Deichsel angehängt werden soll, variieren. Dies kann in baulichen Unterschieden des Zugfahrzeugs begründet sein; es gibt aber auch Zugeinrichtungen, die bereits als solche, Aufnahmepunkte mit unterschiedlicher Höhenlage aufweisen.

Es ist aufwendig, bekannte Deichseln oder auch Arbeitsgeräte mit einer solchen Deichsel an unterschiedliche Höhenlagen einer Zugvorrichtung eines Zugfahrzeugs anzupassen.

Die der Erfindung zugrunde liegende Aufgabe wird daher darin gesehen, eine Deichsel und ein landwirtschaftliches Arbeitsgerät vorzusehen, durch welche die vorgenannten Nachteile überwunden werden.

Die Aufgabe wird erfindungsgemäß durch die Lehre der Patentansprüche 1 und 10 gelöst. Weitere vorteilhafte Ausgestaltungen und Weiterbildungen der Erfindung gehen aus den Unteransprüchen hervor.

Erfindungsgemäss wird eine Deichsel für ein Arbeitsgerät, insbesondere für eine landwirtschaftliche Ballenpresse, mit einem Deichselträger und einem Koppelmittel vorgeschlagen. Das Koppelmittel ist mit dem Deichselträger verbunden, insbesondere starr und/oder lösbar verbunden. Das Koppelmittel kann am Deichselträger befestigt sein, insbesondere starr und/oder lösbar befestigt sein, oder an den Deichselträger montiert sein, insbesondere starr und/oder lösbar montiert sein. Der Deichselträger ist derart ausgebildet, dass das Koppelmittel mit dem Deichselträger in zwei unterschiedliche Positionen, insbesondere Höhenlagen, zum Deichselträger bringbar, insbesondere anordenbar ist.
Mit anderen Worten, der Deichselträger kann derart ausgebildet sein, dass der Deichselträger eine erste und eine zweite Arbeitsstellung umfasst, insbesondere in einer ersten und einer zweiten Arbeitsstellung ausgebildet und/oder angeordnet sein kann. Das Koppelmittel kann dadurch mit dem Deichselträger in zwei unterschiedliche Positionen zum Deichselträger bringbar sein. Im Speziellen kann das Koppelmittel in einer ersten Arbeitsstellung des Deichselträgers in einer ersten Position, insbesondere einer ersten Höhenlage, zum Deichselträger angeordnet sein und in einer zweiten Arbeitsstellung des Deichselträgers in einer zweiten Position, die von der ersten Position verschieden ist, insbesondere einer zweiten Höhenlage, zum Deichselträger angeordnet sein.

Im Speziellen, beispielsweise wenn ein Arbeitsgerät, insbesondere eine landwirtschaftliche Ballenpresse, die Deichsel umfasst, kann das Koppelmittel so zwei unterschiedliche Positionen, insbesondere zwei Höhenlagen, zum Arbeitsgerät und/oder zum Untergrund oder Boden einnehmen. Der Deichselträger kann ein oder mehrteilig ausgebildet sein, also insbesondere eines oder mehrere Bauteile umfassen. Im Speziellen kann der Deichselträger als ein starrer und/oder einteiliger Deichselträger ausgebildet sein. Bevorzugt kann der Deichselträger in einem Betriebszustand der Deichsel, als wenn die Deichsel oder das Arbeitsgerät an das Zugfahrzeug angehängt ist, als ein starrer und/oder einteiliger Deichselträger ausgebildet sein.

Mit der Deichsel kann das Arbeitsgerät mit einem Zugfahrzeug, beispielsweise einem landwirtschaftlichen Schlepper oder einer anderen Zugmaschine im landwirtschaftlichen oder industriellen Bereich oder auch im Transportwesen verbunden werden, um durch dieses fortbewegt zu werden. Die Deichsel kann in diesem Betriebszustand zwei unterschiedliche Positionen, insbesondere zwei Höhenlagen, zum Zugfahrzeug einnehmen. Die Deichsel kann ausserdem ein Verstellmittel umfassen. Die Deichsel kann mittels des Verstellmittels, beispielsweise einem Aktuator oder ein Hydraulikzylinder oder ein Stellmotor, um eine vertikale Achse, also eine Hochachse, verschwenkt werden, so dass das Arbeitsgerät im Arbeitseinsatz einem Zugfahrzeug nicht direkt nachläuft, sondern einer versetzten Spur folgt.

Auf diese Weise kann die Deichsel flexibel an unterschiedliche Anforderungen angepasst werden, ohne dass hierzu zusätzliche Bauteile erforderlich und/oder aufwendige Umbauten notwendig wären. Bei diesen Anforderungen kann es sich insbesondere darum handeln, die Deichsel in eine Position oder Höhenlage zu bringen, die geeignet ist, um es an ein zur Verfügung stehendes Zugfahrzeug anzuhängen. Zugfahrzeuge weisen häufig Zugeinrichtungen, insbesondere sogenannte Hitches auf, die zumindest einen unteren und/oder einen oberen Anhängepunkt aufweisen. Auch die Größe und/oder der Typ des Zugfahrzeugs oder auch die Art der Bereifung kann Einfluss auf die erforderliche Höhenlage des Koppelmittels nehmen. Bei dem Arbeitsgerät handelt es sich insbesondere um eine landwirtschaftliche Ballenpresse, vorzugsweise um eine Ballenpresse zur Herstellung rundzylindrischer Ballen aus Erntegut, beispielsweise in der Art von Heu, Stroh oder Silage. Es ist aber auch denkbar, dass es sich um eine Ballenpresse zur Herstellung quaderförmiger Ballen oder um ein anderes Arbeitsgerät, beispielsweise auch einen Anhänger oder Ladewagen handeln. Auch der Einsatz im industriellen Bereich oder im Transportwesen ist denkbar.

In Ausgestaltung der Erfindung umfasst der Deichselträger einen Schwenkarm und einen Deichselarm, wobei ein erstes Ende des Deichselarms mit dem Schwenkarm verbunden ist, insbesondere lösbar verbunden ist, oder das erste Ende des Deichselarms am Schwenkarm befestigt oder montiert ist, insbesondere lösbar befestigt oder lösbar montiert ist. Mit anderen Worten, das erste Ende des Deichselarms kann mit dem Schwenkarm derart verbunden sein oder das erste Ende des Deichselarms derart am Schwenkarm befestigt oder montiert sein, dass der Deichselträger als ein starrer und/oder einteiliger Deichselträger ausgebildet ist. Ein zweites Ende des Deichselarms ist mit dem Koppelmittel verbunden, insbesondere starr und/oder lösbar verbunden, oder das zweite Ende des Deichselarms ist am Koppelmittel befestigt, insbesondere starr und/oder lösbar befestigt, oder an das Koppelmittel montiert, insbesondere starr und/oder lösbar montiert.

Der Deichselträger ist derart ausgebildet, dass der Deichselarm mit dem Schwenkarm in zwei Arbeitsstellungen, insbesondere einer ersten oder einer zweiten Arbeitsstellung, verbindbar oder verbunden ist, insbesondere starr und/oder lösbar verbindbar oder verbunden ist, sodass das Koppelmittel mit dem Deichselträger, insbesondere dem Deichselarm, in zwei unterschiedliche Positionen, insbesondere Höhenlagen, zum Deichselträger, insbesondere zum Schwenkarm, bringbar, insbesondere angeordnet ist. Mit anderen Worten, der Deichselarm kann mit dem Schwenkarm derart in zwei Arbeitsstellungen verbindbar sein, dass das Koppelmittel zwei unterschiedliche Positionen, insbesondere Höhenlagen, zum Deichselträger, insbesondere zum Schwenkarm, einnehmen bzw. in zwei unterschiedlichen Positionen angeordnet sein kann. Der Deichselarm kann also derart ausgebildet sein, dass der Deichselarm am Schwenkarm in einer ersten oder einer zweiten Arbeitsstellungen befestigt und/oder montiert sein kann, insbesondere starr und/oder lösbar befestigt und/oder montiert sein kann. Im Speziellen kann das Koppelmittel, wenn der Deichselarm mit dem Schwenkarm in der ersten Arbeitsstellung verbunden ist, in die erste Position, insbesondere eine erste Höhenlage, zum Deichselträger, bringbar sein, insbesondere angeordnet sein. Ausserdem kann das Koppelmittel, wenn der Deichselarm mit dem Schwenkarm in der zweiten Arbeitsstellung verbunden ist, in eine zweite Position, die von der ersten Position verschieden ist, insbesondere in eine zweite Höhenlage, zum Deichselträger, insbesondere zum Schwenkarm, bringbar sein, insbesondere angeordnet sein. Bevorzugt kann der Deichselträger in einem Betriebszustand der Deichsel, als wenn die Deichsel oder das Arbeitsgerät an das Zugfahrzeug angehängt ist, als ein starrer und/oder einteiliger Deichselträger ausgebildet sein. Im Betriebszustand kann der Deichselarm mit dem Schwenkarm also fest verbunden sein, sodass der Deichselträger als starrer und/oder einteiliger Deichselträger ausgebildet sein kann. Der Deichselarm kann dabei derart ausgebildet sein, dass er bezogen auf den Schwenkarm mittels einer Rotationsbewegung in die wenigstens zwei Arbeitsstellungen bringbar ist, insbesondere anordenbar ist, in der das Koppelmittel unterschiedliche Positionen, insbesondere Höhenlagen, einnimmt. Die Deichsel weist die oben genannten Vorteile auf.

Ein einfacher und stabiler Aufbau ergibt sich, wenn der Deichselarm zwei Rahmenteile aufweist, welche V-förmig angeordnet sind. Das Koppelmittel ist vorzugsweise im Scheitelpunkt des Deichselarms oder an diesen angrenzend angeordnet, wodurch sich eine günstige Kraftverteilung in dem Deichselarm ergibt. Vorzugsweise ist das Koppelmittel mit dem Deichselarm bzw. dessen Rahmenteilen dreh- und/oder schwenkbar verbunden, so dass seine Stellung beispielsweise mit Bezug auf den Deichselarm in einfacher Weise angepasst werden kann.

In Ausgestaltung der Erfindung, weisen der Schwenkarm und der Deichselarm jeweils einen oder mehrere Verbindungsbereiche auf. Die Verbindungsbereiche können vorzugsweise überlappend angeordnet sein. Darüber hinaus oder auch alternativ sind der Schwenkarm und der Deichselarm mittels mit fluchtenden Ausnehmungen in den Verbindungsbereichen zusammenwirkenden Befestigungsmitteln miteinander verbunden, insbesondere zumindest rotationsfest gegeneinander gesichert werden. Die Befestigungsmittel können beispielsweise Bolzen oder Schrauben sein, die durch die fluchtenden Ausnehmungen gesteckt und durch geeignete Sicherungsmittel, beispielsweise in der Art von Muttern oder Stiften oder Schraubengewinde im Schwenkarm bzw. Deichselarm gesichert werden können.
Im Speziellen können der Schwenkarm und der Deichselarm jeweils mindestens zwei Ausnehmungen pro Verbindungsbereich aufweisen, bevorzugt jeweils 2 bis 20 Ausnehmungen pro Verbindungsbereich, besonders bevorzugt jeweils fünf bis 10 Ausnehmungen pro Verbindungsbereich aufweisen. Pro Verbindungsbereich können mindestens jeweils zwei Ausnehmungen des Schwenkarms und des Deichselarms, bevorzugt jeweils zwei bis 20 Ausnehmungen des Schwenkarms und des Deichselarms, besonders bevorzugt jeweils 5 bis 10 Ausnehmungen des Schwenkarms und des Deichselarms, fluchtend zueinander angeordnet und mit Befestigungsmitteln verbunden sein. Dabei können mindestens zwei Befestigungsmittel pro Verbindungsbereich, bevorzugt zwei bis 20 Befestigungsmittels pro Verbindungsbereich, besonders bevorzugt 5 bis 10 Befestigungsmittel pro Verbindungsbereich, zum Verbinden des Schwenkarms mit dem Deichselarm über die fluchtenden Ausnehmungen verwendet werden. Die Ausnehmungen eines Verbindungsbereiches des Schwenkarms können auch versetzt zu den Ausnehmungen eines korrespondierenden Verbindungsbereichs des Deichselarms angeordnet sein. Dadurch kann der Deichselarm mit dem Schwenkarm in weiteren zusätzlichen Arbeitsstellungen, also insbesondere mehr als zwei Arbeitsstellungen, verbindbar sein, so dass das Koppelmittel zusätzliche Positionen, insbesondere zusätzliche Höhenlagen, also mehr als zwei Positionen oder Höhenlagen, zum Deichselträger, insbesondere zum Schwenkarm, einnehmen kann. Der Abstand zwischen zwei Ausnehmungen kann 10 mm bis 100 mm, bevorzugt 30 mm bis 60 mm, besonders bevorzugt 40 oder 50 mm betragen. Es ist aber auch denkbar, dass an einem oder beiden Verbindungsbereichen Vorsprünge vorgesehen sind, die mit entsprechenden Aussparungen in dem anderen Verbindungsbereich zusammenwirken und/oder in diesen entsprechend gesichert werden können. Dadurch kann vorteilhafterweise erreicht werden, dass der Deichselträger als starrer und/oder einteiliger Deichselträger ausgebildet ist.

Vorzugsweise ist der Deichselarm bzw. sind die Rahmenteile von der Seite betrachtet zumindest annähernd als ein ungleichschenkliges, insbesondere rechtwinkliges Dreieck ausgebildet.

Ein besonders einfacher Aufbau ergibt sich, wenn der rechte Winkel des Dreiecks an die Befestigungsbereiche angrenzt und/oder von dem Scheitelpunkt beabstandet vorgesehen ist.

Besonders einfach ist es, wenn der Deichselarm an dem Schwenkarm in zwei, vorzugsweise um die der längsten Seite des Dreiecks gegenüberliegenden Seite des Dreiecks spiegelbildliche Arbeitsstellungen montierbar ist. Mit anderen Worten, der Deichselarm kann mit dem Schwenkarm in zwei Arbeitsstellungen, beispielsweise in der ersten und zweiten Arbeitsstellung, verbindbar sein, indem der Deichselarm um 180 Grad drehbar ist.

Eine einfache Verstellmöglichkeit ergibt sich, wenn der Deichselarm mit dem Schwenkarm um eine zumindest im Wesentlichen erste Schwenkachse schwenkbar verbunden. So kann das Koppelmittel in Abhängigkeit von der Schwenkstellung des Deichselarms unterschiedliche Höhenlagen einnehmen.

Weisen sowohl der Schwenkarm als auch der Deichselarm Zahnscheiben auf, so kann der Deichselarm an dem Schwenkarm in unterschiedlichen Rotationsstellungen gesichert werden. Hierzu werden die Zahnscheiben jeweils in eine Stellung gebracht, in der sie über ihre jeweiligen Zähne einrasten und beispielsweise mittels einer Schraubverbindung gesichert werden können.

Die Erfindung betrifft weiter ein landwirtschaftliches Arbeitsgerät, insbesondere eine landwirtschaftliche Ballenpresse, mit einer Deichsel nach einem der Ansprüche 1 bis 9. Das landwirtschaftliche Arbeitsgerät weist die Vorteile der erfindungsgemässen Deichsel auf. Bei der landwirtschaftlichen Ballenpresse kann es sich um eine Presse zum Bilden von rundzylindrischen, aber auch von quaderförmigen Ballen handeln. Das Arbeitsgerät kann aber auch in der Art eines Ladewagens oder eines anderen gezogenen Geräts ausgebildet sein. Es kann sich aber auch um einen üblichen Anhänger zur Aufnahme bzw. dem Transport von insbesondere landwirtschaftlichem Material handeln. Das Arbeitsgerät kann aber auch im industriellen Bereich oder im Transportwesen eingesetzt werden.

In Ausgestaltung der Erfindung umfasst die Ballenpresse einen Rahmen, wobei die Deichsel mit dem Rahmen verbunden ist, insbesondere schwenkbar und/oder lösbar verbunden ist. Die Deichsel kann mit dem Rahmen mittelbar oder unmittelbar verbunden sein.

Vorteilhafterweise umfasst die Ballenpresse einen Deichselhalter. Der Deichselhalter ist mit dem Rahmen und der Deichsel, insbesondere dem Schwenkarm, verbunden. Im Speziellen ist die Deichsel, bevorzugt der Deichselträger, besonders bevorzugt der Schwenkarm, schwenkbar mit dem Deichselhalter verbunden, insbesondere um eine Hochachse schwenkbar verbunden und/oder gelagert. Die Deichsel umfasst ausserdem ein Verstellmittel zum Verstellen der Deichsel. Unter Verstellen kann hierbei ein Verschwenken der Deichsel relativ oder in Bezug zum Arbeitsgerät verstanden werden. Die Deichsel, bevorzugt der Deichselträger, besonders bevorzugt der Schwenkarm, kann also mittels des Verstellmittels verschwenkbar sein, insbesondere relativ oder in Bezug zum Arbeitsgerät verschwenkbar sein.

In Ausgestaltung der Erfindung ist der Deichselhalter mit einem Achsgehäuse verbunden, insbesondere um eine zweite Schwenkachse schwenkbar verbunden, und das Achsgehäuse ist mit dem Rahmen der Ballenpresse verbunden, bevorzugt lösbar verbunden, besonders bevorzugt montiert und/oder befestigt. Der Deichselhalter kann mittels eines oder mehrerer Bolzen mit dem Achsgehäuse um die zweite Schwenkachse schwenkbar verbunden.

In Ausgestaltung der Erfindung ist ein erstes Ende des Verstellmittels mit dem Schwenkarm und ein zweites Ende mit dem Deichselhalter verbunden. Die Deichsel, bevorzugt der Schwenkarm, ist mit dem Verstellmittel, insbesondere um die Hochachse, zum Deichselhalter und/oder Rahmen, insbesondere zum Arbeitsgerät verschwenkbar.

Anhand der Zeichnungen, die Ausführungsbeispiele der Erfindung zeigen, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht einer Zugfahrzeug-Arbeitsgerät-Kombination mit einem Zugfahrzeug und einem erfindungsgemässen Arbeitsgerät, welches mittels einer erfindungsgemässen Deichsel an das Zugfahrzeug gekoppelt ist, und
- Fig. 2: eine schematische Darstellung eines ersten Ausführungsbeispiels der erfindungsgemässen Deichsel, und
- Fig. 3 a-b: jeweils eine schematische Seitenansicht des ersten Ausführungsbeispiels der erfindungsgemässen Deichsel, und
- Fig. 4: eine schematische Darstellung eines zweiten Ausführungsbeispiels der erfindungsgemässen Deichsel, und
- Fig. 5 a-b: jeweils eine schematische Seitenansicht des zweiten Ausführungsbeispiels der erfindungsgemässen Deichsel, und
- Fig. 6: eine schematische Draufsicht von oben des erfindungsgemässen Arbeitsgeräts mit einer erfindungsgemässen Deichsel.

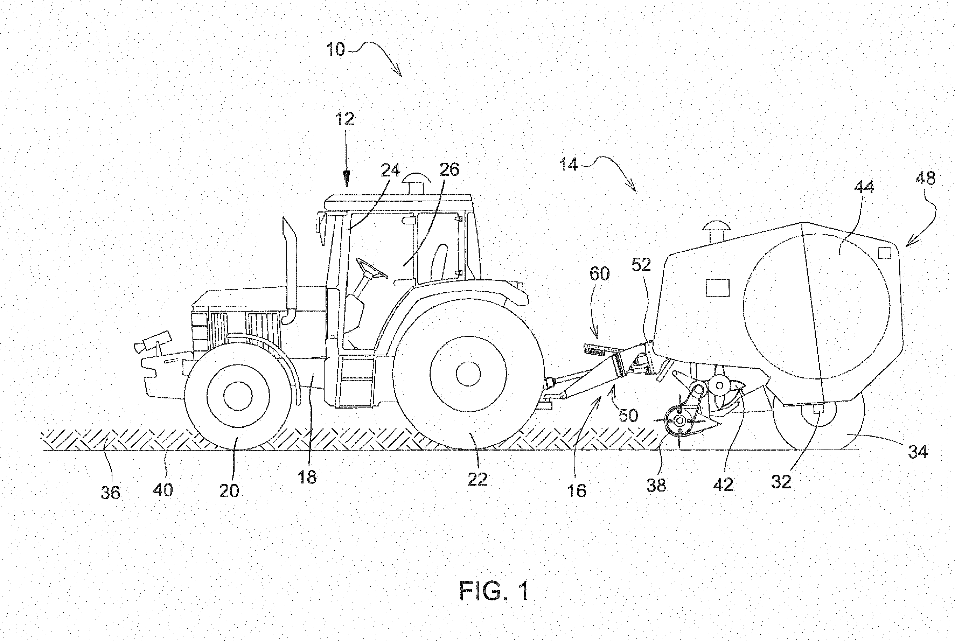

Figur 1 zeigt eine schematische Seitenansicht einer Zugfahrzeug-Arbeitsgeräts-Kombination 10 mit einem Zugfahrzeug 12 in der Art eines Traktors oder Schleppers und einem landwirtschaftlichen Arbeitsgerät 14, das im vorliegenden Ausführungsbeispiel als eine landwirtschaftliche Ballenpresse, insbesondere als eine Rundballenpresse, ausgebildet ist. Das Zugfahrzeug 12 und das Arbeitsgerät 14 sind mittels einer Deichsel 16 gekoppelt.

Das Zugfahrzeug 12 kann einen Rahmen 18, der sich auf lenkbaren Vorderrädern 20 und Hinterrädern 22 abstützt, und eine Kabine 24 aufweisen, in der sich ein Bedienerarbeitsplatz 26 befindet. Das Arbeitsgerät 14 wiederum kann einen Rahmen 32 aufweisen, der sich über Räder 34 auf dem Untergrund 40 bzw. Boden abstützt. Darüber hinaus ist ein in der Art eines Aufnehmers ausgebildetes Bearbeitungselement 38, beispielsweise eine Pick-up, zur Aufnahme von in einem Schwad 36 auf dem Untergrund 40 liegendem Erntegut und ein Förderer 42 vorgesehen, der das durch das Bearbeitungselement 38 aufgenommene Erntegut in einen Ballenpressraums 44 fördert. Das Bearbeitungselement 38 ist in bekannter Weise beweglich mit dem Rahmen 32 verbunden, und kann sich darüber hinaus über eines oder mehrere Räder (nicht gezeigt) auf dem Untergrund 40 abstützen. Der Ballenpressraum 44 wird in an sich bekannter Weise durch Pressmittel (nicht gezeigt) begrenzt. Ein fertig gestellter Ballen kann durch eine nach oben schwenkbare Auswurfklappe 48 ausgeworfen und auf dem Untergrund 40 abgelegt werden.

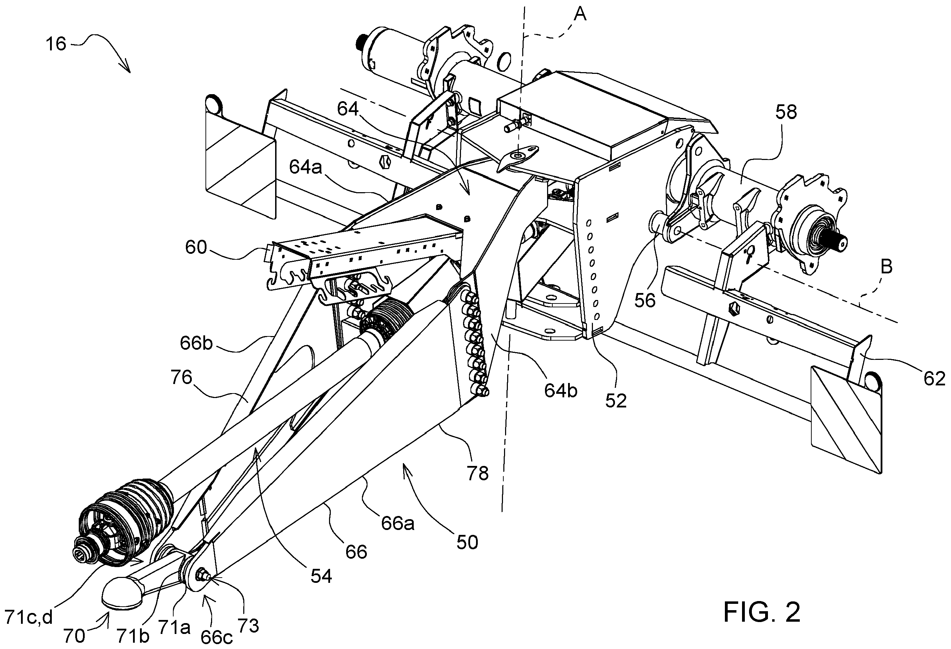

Das landwirtschaftliche Arbeitsgerät 14 kann die Deichsel 16 umfassen. Ausserdem umfasst das Arbeitsgerät 14 einen Deichselhalter 52. Der Deichselhalter 52 ist mit dem Rahmen 32 und der Deichsel 16, bevorzugt einem Deichselträger 50, 50`, besonders bevorzugt einem Schwenkarm 64, 64' (siehe Figur 2), verbunden. Im Speziellen ist der Deichselhalter 52 ist mit einem Achsgehäuse 58 verbunden (siehe Figur 2), insbesondere um eine zweite Schwenkachse B schwenkbar verbunden (siehe Figur 2). Das Achsgehäuse 58 ist mit dem Rahmen 32 des Arbeitsgeräts 14 verbunden, insbesondere an diesen montiert oder an diesem befestigt. Im Speziellen kann die Deichsel 16 aber auch direkt mit dem Rahmen 32 verbunden sein.

In allen Ausführungsbeispielen umfasst die Deichsel 16 und/oder insbesondere das Arbeitsgerät 14 ein Verstellmittel 82, insbesondere einen Aktuator oder Hydraulikzylinder oder einen Stellmotor. Die Deichsel 16, bevorzugt der Deichselträger 50, 50`, besonders bevorzugt der Schwenkarm 64, 64', ist mittels des Verstellmittels 82 verschwenkbar. Dabei kann insbesondere ein erstes Ende des Verstellmittels 82 mit dem Schwenkarm 64, 64' und ein zweites Ende mit dem Deichselhalter 52 verbunden sein, sodass die Deichsel mit dem Verstellmittel 82, insbesondere um eine Hochachse A, zum Rahmen 32 oder zum Arbeitsgerät 14 verschwenkbar ist, bevorzugt der Schwenkarm 64, 64' zum Deichselhalter 52 verschwenkbar ist.

Figur 2 zeigt eine schematische Darstellung eines ersten Ausführungsbeispiels der erfindungsgemässen Deichsel mit einem Teil des Arbeitsgeräts 14. Die in Figur 2 gezeigte Deichsel 16 entspricht im Wesentlichen der in Figur 1 gezeigten Deichsel 16, sodass im Folgenden lediglich auf Details und/oder Unterschiede eingegangen wird. Das landwirtschaftliche Arbeitsgerät 14 kann die Deichsel 16, wie in Figur 2 dargestellt, umfassen.

Mittels der Deichsel 16 kann das Arbeitsgerät 14 an das Zugfahrzeug 12 angekoppelt werden bzw. über dieses, wie in der Figur 1 dargestellt, angekoppelt sein. Die Deichsel 14, bevorzugt der Deichselträger 50, 50', besonders bevorzugt der Schwenkarm 64, 64', ist schwenkbar mit dem Deichselhalter 52 verbunden, insbesondere um die Hochachse A schwenkbar gelagert. Im Speziellen wird die Deichsel 50 am Deichselhalter 52 um die Hochachse A schwenkbar aufgenommen.

Die Deichsel 16 umfasst den Deichselträger 50, 50' und ein Koppelmittel 70, wobei das Koppelmittel 70 mit dem Deichselträger 50, 50' verbunden ist. Der Deichselträger 50, 50' ist derart ausgebildet ist, dass das Koppelmittel 70 mit dem Deichselträger 50, 50' in zwei unterschiedliche Positionen, insbesondere Höhenlagen, zum Deichselträger 50, 50' bringbar ist. Der Deichselträger 50, 50' umfasst den Schwenkarm 64, 64' und einen Deichselarm 66, 66`. Ein erstes Ende des Deichselarms 66, 66' ist mit dem Schwenkarm 64, 64' verbunden und ein zweites Ende des Deichselarms 66, 66' mit dem Koppelmittel 70 verbunden. Der Deichselarm 66, 66' ist derart ausgebildet, dass der Deichselarm 66, 66' mit dem Schwenkarm 64, 64' in einer ersten oder einer zweiten Arbeitsstellung verbindbar oder verbunden ist, insbesondere starr und/oder lösbar verbindbar oder verbunden ist, sodass das Koppelmittel 70 mit dem Deichselträger 50, 50' in zwei unterschiedliche Positionen, insbesondere Höhenlagen, zum Deichselträger 50, 50`, insbesondere zum Schwenkarm 64, 64', bringbar und/oder angeordnet ist.

Das Arbeitsgerät 14 umfasst eine Antriebskomponente 54, mittels der mechanische Antriebsenergie von dem Zugfahrzeug 12 zu dem Arbeitsgerät 14 übertragen werden kann. Die Antriebskomponente 54 kann hierzu in bekannter Weise mit einer Zapfwelle des Zugfahrzeugs 12 verbunden werden.

Der Deichselhalter 52 ist mit einem Achsgehäuse 58, insbesondere mittels Bolzen 56 um die zweite Schwenkachse B schwenkbar verbunden. In dem Achsgehäuse 58, das an dem Rahmen 32 des Arbeitsgeräts 14 befestigt ist, ist eine nicht gezeigte Antriebsachse angeordnet, mittels der angetriebene Bauteile, wie beispielsweise das Bearbeitungsmittel 38 oder ein oder mehrere der nicht gezeigten Pressmittel angetriebenen werden können. Des Weiteren ist ein Halter 60, der sich von der Deichsel 16 nach oben erstreckt und zur Aufnahme nicht gezeigter Leitungen und Kabel dient, und ein Abweiser 62 vorgesehen.

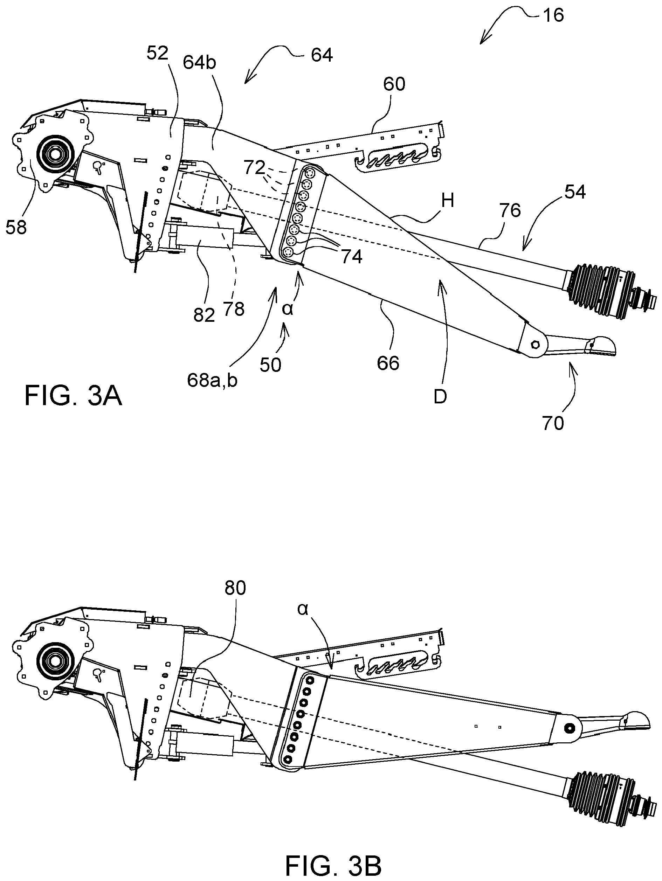

Die Figuren 3a und 3b zeigen jeweils eine schematische Seitenansicht des ersten Ausführungsbeispiels der erfindungsgemässen Deichsel. Die in den Figuren 3a und 3b gezeigte Deichsel 16 entspricht im Wesentlichen der in den Figuren 1 und 2 gezeigten Deichsel 16, sodass im Folgenden lediglich auf Details und/oder Unterschiede eingegangen wird. Das landwirtschaftliche Arbeitsgerät 14 kann die Deichsel 16, wie in Figur 3 dargestellt, umfassen.

Der Schwenkarm 64 wiederum weist einen Oberträger 64a (siehe Figur 2), Seitenteile 64b und einen nur andeutungsweise gezeigten Innenträger auf. Der Deichselarm 66 weist einen ersten Rahmenteil 66a und einen zweiten Rahmenteil 66b auf, welche von oben betrachtet im Wesentlichen V-förmig angeordnet sind. Im Scheitelpunkt 66c der Rahmenteile 66a, 66b ist das Koppelmittel 70 vorgesehen. Mit Bezug auf die Figuren 3a, b ist deutlich erkennbar, dass die Rahmenteile 66a, 66b von der Seite betrachtet jeweils in der Art eines annähernd rechtwinkligen Dreiecks D ausgebildet sind, wobei der rechte Winkel α des Dreiecks D dem Scheitelpunkt 66c gegenüberliegend angeordnet ist

Das Koppelmittel 70 ist mit dem Deichselarm 66 bzw. den Rahmenteilen 66a, 66b lösbar verbunden. Hierfür sind an dem Koppelmittel 70 sowie den Rahmenteilen 66a, 66b jeweilige Zahnscheiben 71a, 71b, 71c, 71d vorgesehen, welche in unterschiedlichen Winkelstellungen miteinander einrasten können und mittels einer Schraubverbindung 73 gesichert werden können.

Der Schwenkarm 64 und der Deichselarm 66 sind lösbar miteinander verbunden. Hierzu weisen sowohl der Schwenkarm 64 bzw. seine Seitenteile 64b und der Deichselarm 66 bzw. seine Rahmenteile 66a jeweilige Verbindungsbereich 68a, 68b auf, in denen Ausnehmungen 72a, b vorgesehen sind. Die Ausnehmungen 72a, b sind gemäß dem vorliegenden Ausführungsbeispiel in der Art von annähernd vertikal in Reihe angeordneten Bohrungen ausgebildet und können zum Verbinden des Schwenkarms 64 und des Deichselarms 66 derart fluchtend ausgerichtet werden, dass zumindest zwei der Ausnehmungen 72a des Schwenkarms 64 mit wenigstens zwei der Ausnehmungen 72b des Deichselarms 66 mittels geeigneter Befestigungsmittel 74, beispielsweise in der Art von Verschraubungen oder Bolzenverbindungen verbunden werden können. Im gezeigten Ausführungsbeispiel sind vier Befestigungsmittel 74 vorgesehen.

Die Antriebskomponente 54 weist eine Antriebswelle 76 und ein Umlenkgetriebe 78 auf und wird zwischen den Rahmenteilen 66a, b zu dem Schwenkarm 64 geführt, wo das Umlenkgetriebe 78 in dem Innenträger 64c des Schwenkarms 64 gelagert wird. Das Umlenkgetriebe 76 kann über eine in Figur 3b gezeigte Gelenkwelle 80 über ein nicht gezeigtes Getriebe mit der in dem Achsgehäuse 58 angeordneten, ebenfalls nicht dargestellten Antriebswelle wirksam verbunden werden.

Darüber hinaus ist das in der Art eines Hydraulikzylinders ausgebildetes Verstellmittel 82 vorgesehen, welches einenends an dem Deichselhalter 52 und andernends an dem Schwenkarm 64, 64' angelenkt ist, um den Deichselträger 50, 50' bzw. die Deichsel 50 mit Bezug auf den Deichselhalter 52 um die Hochachse A verschwenken zu können.

Es soll im Folgenden nun auch auf die genaue Funktionsweise der variablen Deichsel 50 eingegangen werden. Gemäß der Darstellung in den Figuren 3a und b wird deutlich, dass der Oberträger 64 und der Deichselarm 66 in den unterschiedlichen Positionen verbunden werden können.

Gemäß der Darstellung in der Figur 3a der Zeichnung ist die Hypotenuse H des im Wesentlichen rechtwinkligen Dreiecks D bezogen auf den Untergrund 40 oben angeordnet; in der Figur 3b ist die Hypotenuse H dagegen bezogen auf den Untergrund 40 unten angeordnet. Auf diese Weise ergibt sich eine unterschiedliche Höhenlage des Scheitelpunkts 66c und damit des Koppelmittels 70.

Da das Koppelmittel 70 mit dem Deichselarm 66 bzw. den Rahmenteilen 66a, b lösbar verbunden ist, kann es zur Anpassung an die Drehposition des Deichselarms 66 um 180° gedreht werden. Mittels der Zahnscheiben 71a, b, c, d kann es darüber hinaus in unterschiedliche Winkelstellungen eingerastet werden. Eine Sicherung in der gewünschten Winkelstellung bzw. Lage erfolgt mittels der Schraubverbindung 73.

Darüber hinaus und/oder zusätzlich kann die Höhenlage des Scheitelpunkts bzw. des Koppelmittels 70 mittels der Ausnehmungen 72a, 72b und der zugeordneten Befestigungsmittel 74 variiert werden. Wie dargestellt, sind die Ausnehmungen 72a, 72b in dem Schwenkarm 64 bzw. dem Deichselarm 66 derart fluchtend angeordnet, dass in diese Befestigungsmittel 74 eingesetzt und gesichert sind. Es ist nun auch möglich die Ausnehmungen 72a, 72b derart anzuordnen, dass der Deichselarm 66 bezogen auf den Schwenkarm 64 höher bzw. tiefer angeordnet ist, so dass die Höhenlage des Koppelmittels 70 weiter verändert werden kann. Vorzugsweise sollten aber zur Verbindung des Schwenkarms 64 mit dem Deichselarm 66 wenigstens zwei Befestigungsmittel 72 vorgesehen sein.

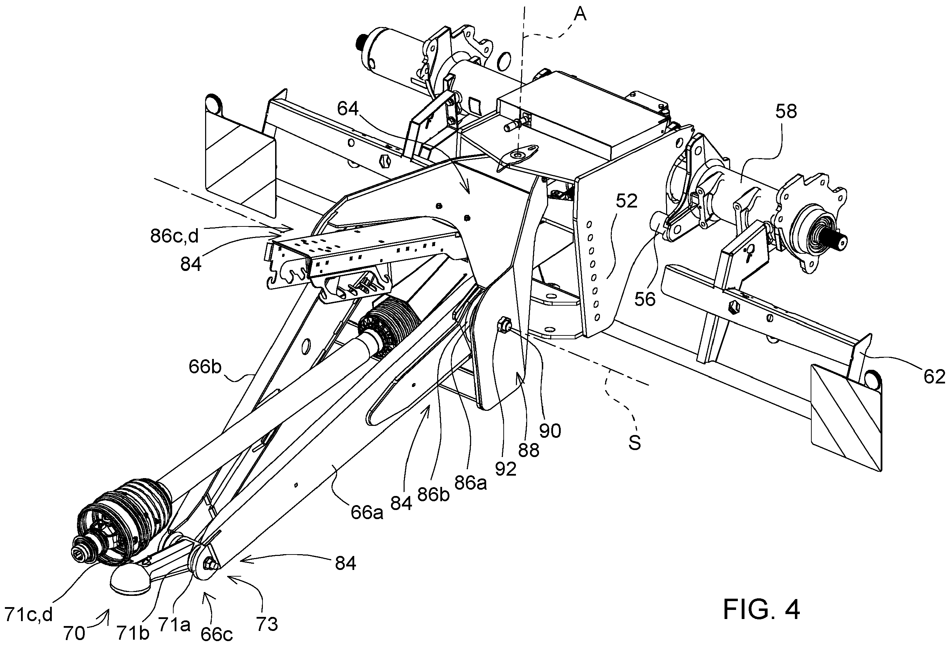

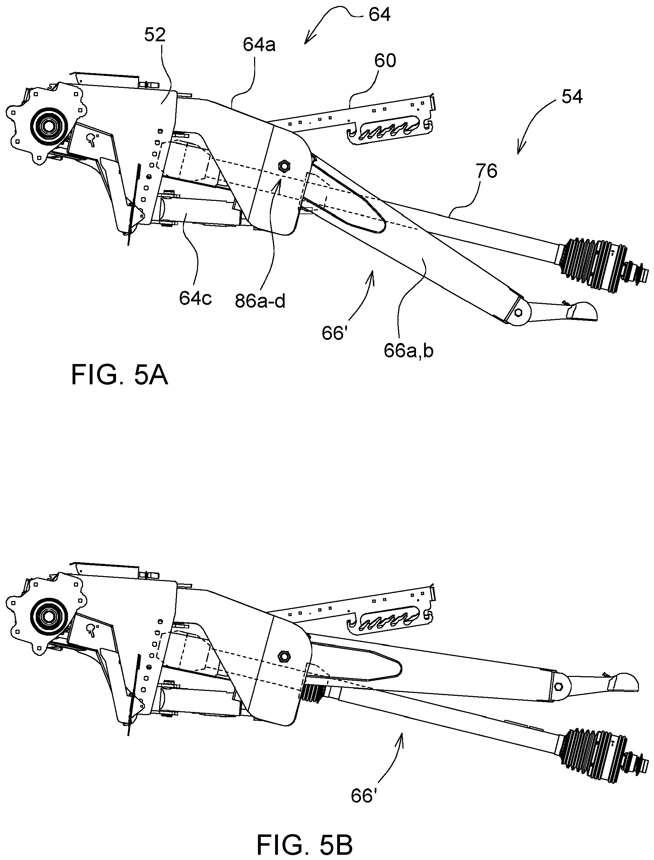

Figur 4 zeigt eine schematische Darstellung eines zweiten Ausführungsbeispiels der erfindungsgemässen Deichsel 16 mit einem Teil des Arbeitsgeräts 14. Die Figuren 5a und 5b zeigen jeweils eine schematische Seitenansicht des zweiten Ausführungsbeispiels der erfindungsgemässen Deichsel 16 in unterschiedlichen Positionen. Die in den Figuren 4, 5a und 5b gezeigte Deichsel 16 entspricht im Wesentlichen der in den Figuren 1, 2, 3a und 3b gezeigten Deichsel 16, sodass im Folgenden lediglich auf Details und/oder Unterschiede eingegangen wird. Das landwirtschaftliche Arbeitsgerät 14 kann die Deichsel 16, wie in den Figuren 4, 5a und 5b dargestellt, umfassen. Für der ersten Ausführungsform entsprechende Bauteile werden die gleichen Referenzzeichen verwendet werden, äquivalente Bauteile werden mit einem Apostroph gekennzeichnet, neue Bauteile werden neu nummeriert.

Der Deichselarm 66' der Deichsel 16 gemäß dem zweiten Ausführungsbeispiel weist erste und zweite Rahmenteile 66'a, b auf, welche im Wesentlichen symmetrisch, im gezeigten Fall in der Art von Vierkantträgern, ausgebildet sind. Jeder der Rahmenteile 66'a, b weist in einem dem Schwenkarm 64' zugewandten Bereich 84 eine Zahnscheibe 86a, c auf, welche mit entsprechenden, an dem Schwenkarm 64' vorgesehenen Zahnscheiben 86b, d einrasten können. Hierzu ist in den Bereichen 84a, b jeweils eine Schraubverbindung 88 mit einem Bolzen 90 und einer Mutter 92 vorgesehen. Der Bolzen erstreckt sich jeweils durch nicht gezeigte Aussparungen in dem jeweiligen Rahmenteil 66'a, b, den entsprechenden Zahnscheiben 86a, b, c, d und dem Schwenkarm 64' und definiert eine erste Schwenkachse S, um die der Deichselarm 66'a mit Bezug auf den Schwenkarm 64' verschwenken kann, wenn die Zahnscheiben 86 a - d sich nicht im Eingriff befinden.

In einem den Bereichen 76a, b gegenüberliegenden Bereich 94 ist ein entsprechend dem ersten Ausführungsbeispiel ausgebildetes Koppelmittel 70 vorgesehen, welches über eine mit Zahnscheiben 71a, b, c, d zusammenwirkende Schraubverbindung 73 mit dem Deichselarm 66' bzw. seinen Rahmenteilen 66'a, b lös- und schwenkbar verbunden ist.

In den Figuren 5a, b wird die Deichsel 16 in zwei unterschiedlichen Positionen gezeigt. In der ersten Position gemäß der Figur 5a ist der Deichselarm 66' um die erste Schwenkachse S nach unten verschwenkt dargestellt, in der Figur 5 b nimmt er eine nach oben verschwenkte Position ein. Um den Deichselarm 66' von einer in die andere Position zu überführen, wird die Schraubverbindung 88 gelöst, so dass die Zahnscheiben 86a - d, nicht länger in einer eingerasteten Stellung gesichert sind, und der Deichselarm 66' in die gewünschte Stellung verschwenkt, in der er mittels der Schraubverbindung 78 erneut gesichert wird, in dem die Zahnscheiben 86 a-d miteinander fest einrasten. Neben den gezeigten Positionen kann der Deichselarm 66' und damit die Deichsel 16 weitere Positionen und damit eine Vielzahl an Höhenlagen einnehmen.

Das Koppelmittel 70 kann entsprechend in unterschiedliche Winkelposition gebracht werden, um so eine passende Stellung zum Anbringen an das Zugfahrzeug 12 einnehmen zu können. Im Gegensatz zu dem ersten Ausführungsbeispiel wird das Koppelmittel 70 gemäß dem zweiten Ausführungsbeispiel nicht gedreht, sondern nur verschwenkt.

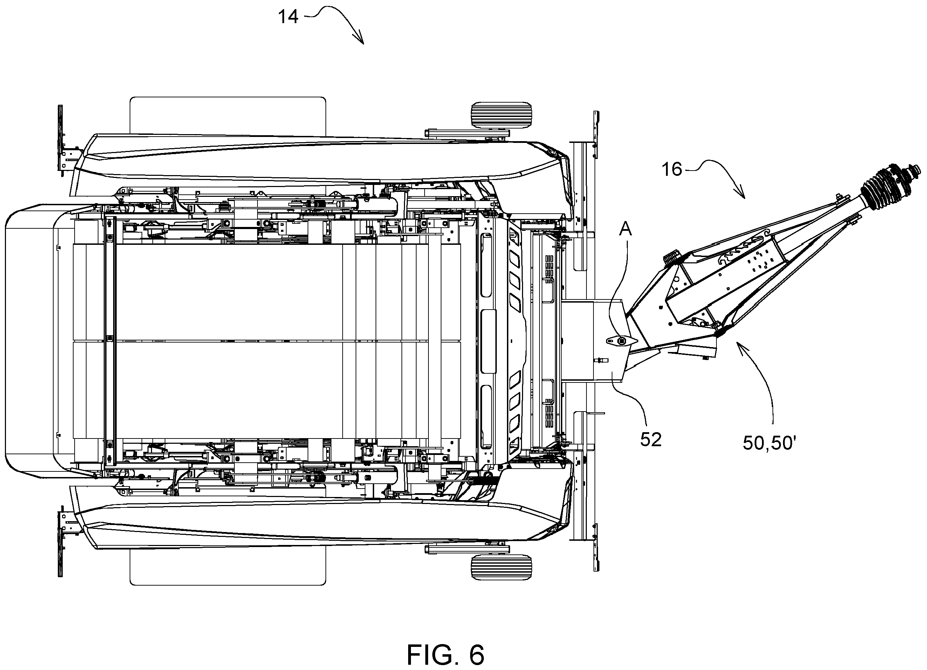

Figur 6 zeigt eine schematische Darstellung des erfindungsgemässen Arbeitsgeräts 14 mit der erfindungsgemässen Deichsel 16. Das in Figur 6 gezeigte Arbeitsgerät 14 und die Deichsel 16 entsprechen im Wesentlichen der in den Figuren 1 bis 5 gezeigten Deichsel 16 bzw. Arbeitsgerät 16, sodass im Folgenden lediglich auf Details und/oder Unterschiede eingegangen wird. Figur 6 zeigt den Deichselträger 50, 50' bzw. die Deichsel 50, die in Bezug auf das Arbeitsgerät 14 bzw. den Deichselhalter 52 um die Hochachse A in bekannter Art und Weise verschwenkt sind.

## Patentansprüche

1. Deichsel für ein landwirtschaftliches Arbeitsgerät (14), insbesondere für eine landwirtschaftliche Ballenpresse, mit einem Deichselträger (50, 50`) und einem Koppelmittel (70), wobei das Koppelmittel (70) mit dem Deichselträger (50, 50`) verbunden ist, **dadurch gekennzeichnet, dass** der Deichselträger (50, 50`) derart ausgebildet ist, dass das Koppelmittel (70) mit dem Deichselträger (50, 50`) in zwei unterschiedliche Positionen zum Deichselträger (50, 50`) bringbar ist.

2. Deichsel nach Anspruch 1, **dadurch gekennzeichnet, dass** Deichselträger einen Schwenkarm (64, 64') und einen Deichselarm (66, 66`) umfasst, wobei ein erstes Ende des Deichselarms (66, 66`) mit dem Schwenkarm (64, 64') verbunden ist und ein zweites Ende des Deichselarms mit dem Koppelmittel (70) verbunden ist, wobei der Deichselträger (50, 50') derart ausgebildet ist, dass der Deichselarm (66, 66`) mit dem Schwenkarm (64, 64') in zwei Arbeitsstellungen verbindbar ist, sodass das Koppelmittel (70) mit dem Deichselträger (50, 50`) in zwei unterschiedliche Positionen zum Deichselträger (50, 50`) bringbar ist.

3. Deichsel nach Anspruch 2, **dadurch gekennzeichnet, dass** der Deichselarm (66, 66') zwei Rahmenteile (66a, b, 66'a, b) aufweist, welche V-förmig angeordnet sind, wobei das Koppelmittel (70) vorzugsweise im Scheitelpunkt (66c) des Deichselarms (66) oder an diesen angrenzend angeordnet ist und das Koppelmittel (70) mit dem Deichselarm (66, 66') bzw. dessen Rahmenteilen (66a, b 66'a, b) vorzugsweise dreh- und/oder schwenkbar verbunden ist.

4. Deichsel nach mindestens einem der vorangehenden Ansprüche, **dadurch gekennzeichnet, dass** der Schwenkarm (64) und der Deichselarm (66) jeweils einen Verbindungsbereich (68a, 68b) aufweisen, der vorzugsweise überlappend angeordnet werden können, und/oder mittels mit fluchtenden Ausnehmungen (72a, 72b) in den Verbindungsbereichen (68a, 68b) zusammenwirkenden Befestigungsmitteln (74) miteinander verbunden sind.

5. Deichsel nach mindestens einem der vorherigen Ansprüche **dadurch gekennzeichnet, dass** der Deichselarm (66) bzw. die Rahmenteile (66a) von der Seite betrachtet zumindest annähernd ein ungleichschenkliges, insbesondere rechtwinkliges Dreieck (D) bilden.

6. Deichsel nach Anspruch 5, **dadurch gekennzeichnet, dass** der rechte Winkel (α) des Dreiecks (D) an die Befestigungsbereiche (68 a,b) angrenzt und/oder von dem Scheitelpunkt (66c) beabstandet vorgesehen ist.

7. Deichsel nach mindestens einem der vorherigen Ansprüche, **dadurch gekennzeichnet, dass** der Deichselarm (66) an dem Schwenkarm (64) in zwei, vorzugsweise um die der Hypotenuse (H) des Dreiecks (D) gegenüberliegenden Seite des Dreiecks (D) spiegelbildliche Stellungen montierbar ist.

8. Deichsel nach mindestens einem der vorherigen Ansprüche, **dadurch gekennzeichnet, dass** der Deichselarm (66') mit dem Schwenkarm (64') um eine zumindest im Wesentlichen erste Schwenkachse (S) schwenkbar verbunden ist.

9. Deichsel nach mindestens einem der vorherigen Ansprüche, **dadurch gekennzeichnet, dass** sowohl der Schwenkarm (64') als auch der Deichselarm (66') Zahnscheiben (86 a - d) aufweisen, über die der Deichselarm (66') am Schwenkarm (64') in unterschiedlichen Rotationsstellungen sicherbar sind.

10. Landwirtschaftliches Arbeitsgerät, insbesondere eine landwirtschaftliche Ballenpresse, mit einer Deichsel nach einem der Ansprüche 1 bis 9.

11. Arbeitsgerät nach Anspruch 10, **dadurch gekennzeichnet, dass** das Arbeitsgerät (14) einen Rahmen (32) umfasst, wobei die Deichsel (16) mit dem Rahmen (32) verbunden ist.

12. Arbeitsgerät nach einem der Ansprüche 10 oder 11, **dadurch gekennzeichnet, dass** das Arbeitsgerät (14) einen Deichselhalter (52) umfasst, und der Deichselhalter (52) mit dem Rahmen (32) und der Deichsel (16) verbunden ist.

13. Arbeitsgerät nach mindestens einem der Ansprüche 10 bis 12, **dadurch gekennzeichnet, dass** die Deichsel (16) schwenkbar mit dem Deichselhalter (52) verbunden ist, insbesondere um eine Hochachse (A) schwenkbar verbunden und/oder schwenkbar gelagert ist, und die Deichsel (16) ein Verstellmittel (82) zum Verstellen der Deichsel umfasst.

14. Arbeitsgerät nach mindestens einem der Ansprüche 12 oder 13, **dadurch gekennzeichnet, dass** der Deichselhalter (52) mit einem Achsgehäuse (58) verbunden ist, insbesondere um eine zweite Schwenkachse (B) schwenkbar verbunden ist, und das Achsgehäuse (58) mit dem Rahmen (32) des Arbeitsgeräts (14) verbunden ist.

15. Arbeitsgerät nach mindestens einem der Ansprüche 13 oder 14, **dadurch gekennzeichnet, dass** ein erstes Ende des Verstellmittels (82) mit dem Schwenkarm (64, 64`) und ein zweites Ende des Verstellmittels (82) mit dem Deichselhalter (52) verbunden ist, und die Deichsel (16) mit dem Verstellmittel (82), insbesondere um die Hochachse (A), zum Deichselhalter (52) und/oder Rahmen (32) verschwenkbar ist.
